# EUROPÄISCHE PATENTSCHRIFT

(11) **EP 4 098 989 B1**
(45) Veröffentlichungstag und Bekanntmachung des Hinweises auf die Patenterteilung: **08.04.2026**
(21) Anmeldenummer: 22174732.2
(22) Anmeldetag: 23.05.2022
(51) Int. Cl.: G01M 3/16, F25B 49/00, F24F 11/36

(54) **LECKAGEDETEKTION**
LEAKAGE DETECTION
DÉTECTION DE FUITES

(30) Priorität: 04.06.2021 DE 102021114416
(43) Veröffentlichungstag der Anmeldung: 07.12.2022
(73) Patentinhaber: Vaillant GmbH, 42859 Remscheid NRW (DE)
(72) Erfinder: Lis, Raimund, 42369 Wuppertal (DE); Habenicht, Martin, 42857 Remscheid (DE); Muessener, Matthias, 42499 Hückeswagen (DE); Heibach, Tim, 42799 Leichlingen (DE); Forner, Pascal, 42857 Remscheid (DE)
(74) Vertreter: Popp, Carsten

(56) Entgegenhaltungen:
- EP-A1- 3 604 980
- US-A1- 2020 011 560
- US-B2- 7 338 640

## Beschreibung

Die Erfindung betrifft ein Detektionssystem für eine Gasleckage. Speziell handelt es sich dabei um eine Leckage eines entzündlichen Gases, welches als Arbeitsfluid in einem Kältekreislauf verwendet wird, und welches bei einem irregulären Zustand aus dem Kältekreis austreten könnte. Solche Austritte sind meist schleichend und äußerst geringfügig, in sehr seltenen Fällen sind aber auch erhebliche Austritte denkbar, beispielsweise wenn der Kältekreis durch äußere Einflüsse erschüttert oder beschädigt wird.

Ein Problem dabei ist, dass Schnelligkeit, Orte und Größenordnungen solcher gasförmiger Kältemittelaustritte nicht im Voraus bekannt sind. Im Falle einer Leckage möchte man aber gerne vor Öffnung eines Gerätes, in dem sich ein solcher Kältekreislauf befindet, wissen, was einen erwartet. Während die entsprechenden Gaskonzentrationen in einem Gehäuse vergleichsweise gut messbar sind, lassen sich der Austrittsort, die Austrittsgeschwindigkeit und die austretende Menge nur schlecht messen oder abschätzen.

Wünschenswert wäre daher ein Messsystem aus einer Vielzahl günstiger Messpunkte, die sich in der Nähe typischer Leckagestellen, wie z.B. Rohrverbindungen und Lagerungen des Verdichters, Wärmetauscheranschlüssen und Armaturen leicht platzieren lassen und deren zeitliche Abfolge beim Messen im Falle einer Leckage Hinweise darauf gibt, wo die Leckage aufgetreten ist und wie groß sie wahrscheinlich ist.

Für die Messstellen kommen verschiedene Technologien zum Einsatz. So beschreibt die EP 3 477 274 A1 ein System zur Leckage-Erkennung eines geschlossenen thermodynamischen Kreisprozesses, bei welchem Schwingungen mittels einer Vielzahl von Beschleunigungssensoren analysiert und ausgewertet werden, und ein für Leckagen typisches Klangmuster oder Schwingungsmuster herausgefiltert wird.

Die EP 3 486 583 A1 beschreibt ein System, bei dem dem Kältekreis ein fluoreszierendes Mittel beigemischt wird, welches an Leckagestellen fluoreszierend aufleuchtet, wobei die Leckage mittels einer Kamera erkannt wird.

Die DE 44 34 814 A1 beschreibt einen infrarotspektroskopischen Sensor für Gase. Hierbei werden die Gase mittels eines Spektrometers im infraroten Spektralbereich anhand ihrer gasspezifischen Absorption selektiv nachgewiesen.

Die DE 10 2013 007 872 B4 beschreibt einen elektrochemischen Gassensor. Hierbei wird in einem Sensorgehäuse eine reversible chemische Reaktion mit dem Gas durchgeführt. Hierzu wird das Gas mit einem Elektrolyten, vorzugsweise einer ionischen Flüssigkeit, die weder hygroskopisch ist noch die Tendenz zum Verdampfen aufweist, in Kontakt gebracht. Dieser Elektrolyt befindet sich in einer Messzelle, die ferner eine Arbeits- oder Messelektrode und die Gegen- oder Hilfselektrode enthält. Die Messzelle kann dabei gasseitig offen oder mit einer gasdurchlässigen Membran verschlossen sein. Aus der charakteristischen Potenzialdifferenz zwischen den Elektroden kann auf den Gehalt des jeweiligen Gases geschlossen werden.

Die DE 44 28 155 C2 und die DE 10 2009 054 435 A1 beschreiben Gassensoren auf Basis anorganischer Metalloxid-Halbleiter (MOX). Bei Kontakt derartiger als poröser Festkörper ausgebildeter Gassensoren mit reduzierenden Stoffen, also beispielsweise Propan aus R290, ändert sich die elektrische Leitfähigkeit des MOX an dessen Oberfläche. Diese Änderung der Leitfähigkeit wird gemessen und dient zur Detektion oder Konzentrationsbestimmung solcher reduzierender Gase. Es sind auch Systeme bekannt geworden, deren Fähigkeit zur Detektion von Gasen nicht auf einer Änderung der elektrischen Leitfähigkeit, sondern auf der thermischen Leitfähigkeit von MOX oder von Aktivkohle in der Folge einer Adsorption beruht. Dies gilt vor allem bei niedrigen Temperaturen.

Auch katalytisch aktive und/oder katalytisch passive Messelemente in katalytischen Gassensoren oder Wärmetönungssensoren, sogenannte Pellistoren, sind bekannt und werden beispielsweise in der DE 35 13 033 A1 beschrieben. Auch Feldeffekttransistoren mit gasartigen Halbleiter-Elementen, beispielsweise gasartensensitiven Gate-Substraten in Halbleiter-Gassensoren sind bekannt.

Die US 2020/011560 A1 beschreibt ein System, wobei eine Kältemaschine eine Außeneinheit und eine Inneneinheit umfasst. Inneneinheit und Außeneinheit sind durch Kältemittelleitungen miteinander verbunden. Luft strömt durch das Gehäuse der Inneneinheit, diese Luft soll dabei je nach Wunsch erwärmt oder gekühlt werden, wobei sie direkt mit einem Kältemittel führenden Wärmetauscher in Kontakt kommt. Im Falle einer Leckage strömt das Kältemittel somit direkt in den Aufstellungsraum, wo mittels weiterer Maßnahmen eine Detektion stattfindet. Die US 2019/170602 A1 beschreibt ein ähnliches System.

Alle diese Messsysteme sind teuer und können immer nur Konzentrationen des gasförmigen Kältemittels an einem bestimmten Ort messen. Zur Messung einer räumlichen Verteilung der leckagebedingt entwichenen Gaskomponente sowie dem zeitlichen Verlauf der räumlichen Verteilung wäre es erforderlich, eine Vielzahl dieser teuren Messsysteme vorzusehen, deren Messergebnisse sowie ihr Ansprechverhalten im Zeitverlauf zu erfassen und anhand eines räumlichen Modells die räumliche Konzentrationsentwicklung zu ermitteln. Nur wenn die zeitliche Abfolge des Konzentrationsanstiegs unter Berücksichtigung der räumlichen Verteilung erkennbar ist, kann auf den Ort der Leckage geschlossen werden.

Bei der Adsorption von Gas in Feststoffen wird Adsorptionsenthalpie freigesetzt, die zu einer Temperaturerhöhung im Adsorptionsmittel führt, während das Adsorptiv aufgenommen wird. Die DE 1 079 860 B beschreibt einen Thermowandler, der mit einem passenden Adsorptionsmittel beschichtet ist, welches danach ausgesucht ist, dass es die zu messende Gaskomponente möglichst selektiv adsorbiert. In einem Gasstrom ist man damit in der Lage, Adsorptive wie z.B. Wasserdampf oder Propan zu adsorbieren und aus der mit dem Thermowandler gemessenen Wärmeentwicklung des Adsorbates auf die entsprechende Gaskonzentration zu schließen. Sobald das Adsorptionsmittel allerdings mit Adsorptiv gesättigt ist, lässt die Wärmeentwicklung nach und die Temperatur des Adsorbates sinkt wieder und gleicht sich der Umgebungstemperatur an. Daher ist vorgesehen, dass das Adsorptionsmittel durch Spülung mit Inertgas wieder regeneriert wird und mit mindestens einem zweiten, gleichartigen System im Wechsel agiert. Auf diese Weise ist eine quasikontinuierliche Konzentrationsmessung möglich.

In ähnlicher Weise lehrt die US 7 338 640 B2 eine Sensorzelle, die mit einem Adsorptionsmittel beschichtet ist und in Verbindung mit einer unbeschichteten Referenzzelle steht. Beide werden auf einem Sensorsubstrat angeordnet. Der Sensor wird so eingerichtet, dass er eine definierte Menge Gas erst adsorbiert und diese dann durch Erhitzen desorbiert. Offenbar schwingt das System zwischen Adsorption und Desorption hin und her. Auf der Sensorzelle wird eine Thermosäule platziert, die den Wärmestrom zwischen beschichteter Sensorzelle und Referenzzelle ermittelt. Die Thermosäule weist eine schlecht leitende Schicht und eine Opferschicht auf, dazwischen wird Material weggeätzt, und es werden eine Vielzahl von thermischen Verbindungen hergestellt, die einem Temperaturunterschied ausgesetzt werden können. Auf diese Weise kann eine ständige Konzentrationsmessung erfolgen.

In einer anderen Weise geht die EP 3 604 980 A1 das Problem für ein Gefriergerät an, indem sie im ersten Schritt eine Konzentrationsmessung für das leckagebedingt ausgetretene Kältemittel durchführt und diese routinemäßig mit einer vorgegebenenen Kältemittelkonzentration vergleicht. Falls diese Messung darauf hindeutet, dass eine Leckage aufgetreten sein könnte, gibt sie eine entsprechende Meldung aus und führt als nächstes eine Sauerstoffmessung durch. Wenn diese eine vorgegebenene Konzentration erreicht, wird eine Meldung ausgegeben, dass eine mögliche Entzündungsgefahr besteht. Daraufhin wird ein starker Lüfter mit voller Drehzahl zur Spülung des Innenraums eingeschaltet. Im Weiteren erfolgt eine Infrarotprüfung zur Überprüfung der Lufttemperatur, und wenn diese einen vorgegebenen Wert überschreitet, wird eine Meldung ausgegeben, dass eine hohe Wahrscheinlichkeit einer Zündung besteht. Dann wird der Kältekreis heruntergefahren.

Die Aufgabe der Erfindung ist daher, eine verbesserte Vorrichtung zur Erkennung einer Leckage eines entzündlichen Kältemittels in einem Kältekreis sowie Hinweise zum Ort und der Größe der Leckage bereitzustellen.

Die Erfindung löst diese Aufgabe durch ein Detektionssystem für eine Gasleckage gemäß den anhängenden Ansprüchen.

Besondere Aufmerksamkeit verdienen die Thermowandler. Hierbei handelt es sich um einen Oberbegriff für Thermoelemente, Widerstandsthermometer, Thermistoren, thermoelektrische Pyrometer und alle anderen auf dem Seebeck-Effekt basierenden Messelemente. Gemeinsam ist ihnen, dass an einer Verbindungsstelle zweier unterschiedlicher Metallteile oder Halbleiter eine elektrische Spannung auftritt, die von der an der Verbindungsstelle herrschenden Temperatur anhängt und sich mit dieser verändert.

Beschichtet man einen dieser Thermowandler mit einem Adsorptionsmittel, erwärmt sich die Verbindungsstelle genau dann, wenn Adsorptionswärme hervorgerufen durch ein Adsorptiv auftritt. Sobald ein Adsorptionsgleichgewicht zwischen dem Adsorbat und dem es umgebenden Gas erreicht ist, findet keine weitere Adsorption und keine weitere Erwärmung mehr statt und die Wärmeleitung bewirkt, dass sich das Adsorbat wieder der Umgebungstemperatur angleicht. Würde die Konzentration des Adsorptives im umgebenden Gasraum wieder fallen, fände eine Desorption unter Abkühlung des Adsorbates statt.

Zieht man die sich ergebende Thermospannung des beschichteten Thermowandlers von der eines unbeschichteten Thermowandlers gleicher Bauart ab, ergibt sich die Differenz als Maß des Anstiegs der ansteigenden Gaskonzentration.

In einer Ausgestaltung ist vorgesehen, dass mit jedem der beschichteten Thermowandler ein unbeschichteter Thermowandler direkt verbunden ist. Auf diese Weise entsteht ein gekoppeltes Thermoelement, welches zwar keine korrekte Temperatur mehr anzeigen kann, aber während des Erwärmungsvorgangs des Adsorbates aus der Spannungsdifferenz ein Spannungssignal abgibt, welches auf eine Leckage schließen lässt.

Erfindungsgemäß ist vorgesehen, dass die Spannungsdifferenz einen Stromfluss bewirkt, der ein RFID betreibt, welches das Spannungssignal per Funk an die zentrale Signalerfassungseinheit überträgt. Das RFID ist dabei direkt mit den Thermowandlern verbunden. Sobald ein Adsorptiv auf das Adsorptionsmittel trifft und adsorbiert wird, erwärmt sich das Adsorbat und es entsteht ein Stromfluss, der das RFID dazu veranlasst, ein entsprechendes Signal an die zentrale Signalerfassungseinheit zu funken.

Die Erfindung wird nachfolgend anhand von fünf Prinzipskizzen näher erläutert. Hierbei zeigen:
Fig. 1 zwei gekoppelte Thermowandler mit Mantelthermoelementen,
Fig. 2 zwei gekoppelte Thermowandler mit Halbleiter-Thermoelementen,
Fig. 3 eine vereinfachte Bauform eines Thermowandlers,
Fig. 4 eine vereinfachte Bauform mit einem RFID,
Fig. 5 eine beispielhafte Anordnung in einem Wärmepumpengehäuse.

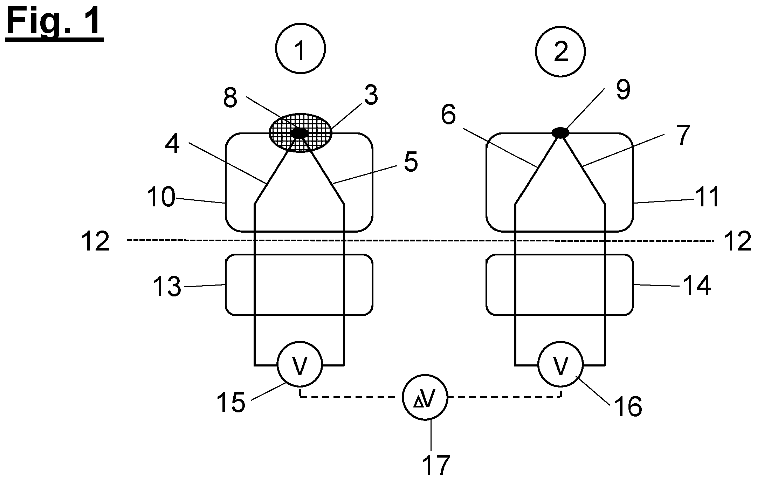

Fig. 1 zeigt die zwei Thermowandler 1 und 2 üblicher Bauart, von denen einer mit einem Adsorptionsmittel 3 beschichtet ist. Hierbei sind die beiden Metalldrähte 4 und 5 des Thermowandlers 1 und 6 und 7 des Thermowandlers 2 aus verschiedenen Metallen, die an den Verbindungspunkten 8 und 9 jeweils miteinander verschweißt sind. Beide Thermowandler 1 und 2 besitzen je eine Schutzhülle 10 und 11, die die empfindlichen Drähte schützen. Diese werden üblicherweise aus dem Gehäuse, in dem sie zur Temperaturmessung eingesetzt werden, herausgeführt, die Gehäusewand ist hier symbolisch mit 12 angedeutet. Außerhalt des Gehäuses befindet sich je eine Vergleichsstelle 13 bzw. 14 mit einer Messkompensation, bei der ein Vergleich mit einer Bezugstemperatur erfolgt. Mit je einem Spannungsmessgerät 15 bzw. 16 werden dann die jeweiligen Thermospannungen gemessen, aus der auf die Temperaturen am Messpunkt geschlossen wird. Auf diese Weise ergibt sich während eines Beladungsvorgangs aus der Differenz der Spannungen im Vergleichsgerät 17 eine Temperaturdifferenz bei den gemessenen Temperaturen, aus der auf einen leckagebedingten Gasaustritt geschlossen werden kann.

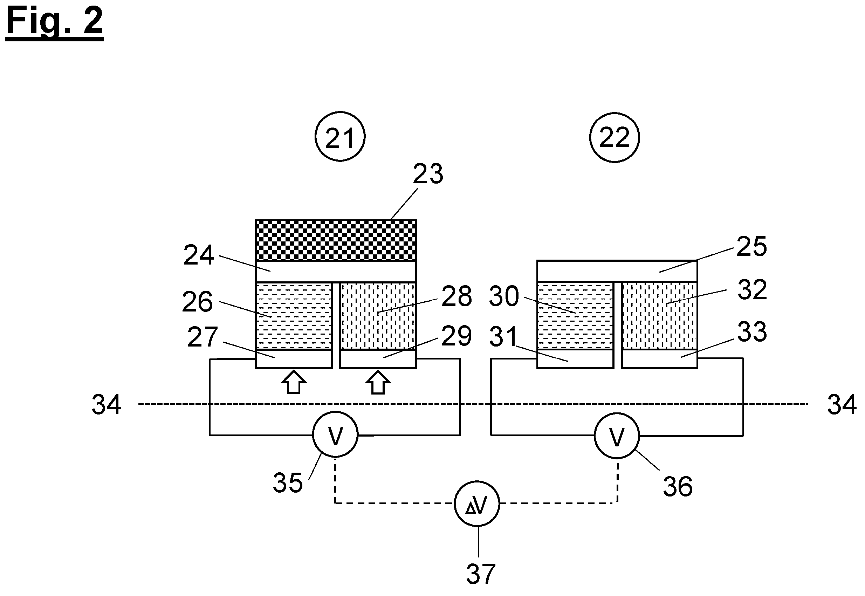

Fig. 2 zeigt eine weitere Vorrichtung, bei der die beiden Thermowandler 21 und 22 durch Halbleiter anstelle von Drähten aufgebaut sind. Hierdurch lassen sich höhere Thermospannungen erreichen, allerdings sind solche Thermowandler empfindlicher. Der Thermowandler 21 besteht aus einer leitfähigen Messfläche 24, auf die ein Adsorptiv 23 aufgebracht ist, sowie einem mit der Messfläche verbundenen n-Halbleiter 26 und einem p-Halbeiter 28, die auf der der Messfläche 24 gegenüberliegenden Seite mit je einer leitenden Messfläche 27 bzw. 29 verbunden sind. Zwischen diesen Messflächen 27 und 29 bildet sich eine Thermospannung, die im Spannungsmessgerät 35 gemessen wird.

Die beiden Messflächen 27 und 29 müssen dabei gekühlt werden, was durch Pfeile angedeutet ist, etwa indem sie mit der Umgebungstemperatur in guter thermischer Verbindung stehen, oder eine Kühleinrichtung vorgesehen ist. Die Kühlung muss dabei so dimensioniert sein, dass sie die Adsorptionswärme, die durch Wärmeleitung durch die Messflächen und die Halbleiter geleitet wird, abführen kann. Ein kleiner Latentwärmespeicher kann diese Funktion ebenfalls erfüllen, da über die Adsorptionswärme insgesamt nur ein relativ kleiner Wärmestrom über eine kurze Zeit abzuführen ist.

In analoger Weise besteht der Thermowandler 22 aus einer leitfähigen Messfläche 25, auf die aber kein Adsorptiv aufgebracht ist, sowie einem mit der Messfläche verbundenen n-Halbleiter 30 und einem p-Halbeiter 32, die auf der der Messfläche 25 gegenüberliegenden Seite mit je einer leitenden Messfläche 31 bzw. 33 verbunden sind. Zwischen diesen Messflächen 27 und 29 bildet sich eine Thermospannung, die im Spannungsmessgerät 36 gemessen wird.

Da nur die Differenz zwischen den Spannungen interessiert, ergibt sich während eines Beladungsvorgangs aus der Differenz der Spannungen im Vergleichsgerät 37 eine Temperaturdifferenz bei den gemessenen Temperaturen, aus der auf einen leckagebedingten Gasaustritt geschlossen werden kann

Da es sich bei der adsorptiven Beladung und der damit verbundenen Wärmeentwicklung um einen dynamischen Vorgang handelt, der von Wärmeabgabe überlagert ist, kann aus der gemessenen Temperaturdifferenz nicht direkt auf die Gaskonzentration im Gehäuse geschlossen werden, was bekanntlich zu weiterem Aufwand führt, wie er schon in der DE 1 079 860 B beschrieben wird. Will man jedoch nur die Ausbreitung einer Gaswolke in einem geschlossenen Gehäuse erkennen, ist eine Kenntnis der Absolutkonzentration nicht erforderlich, es reicht aus, wenn die verschiedenen Detektoren nur jeweils einen Signalimpuls abgeben und danach schweigen.

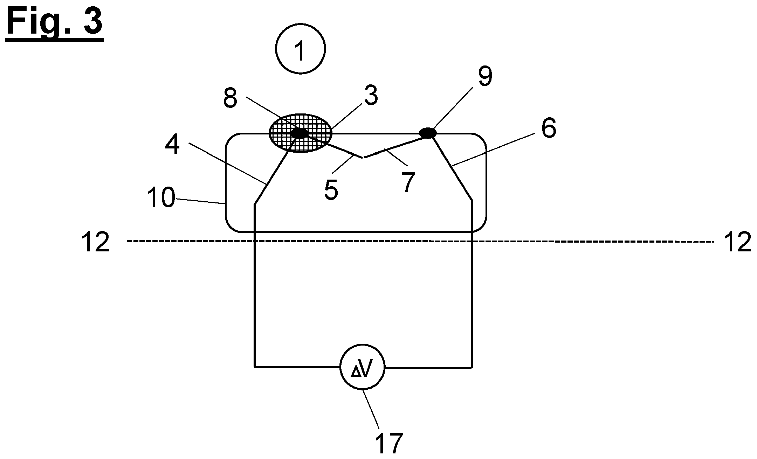

Da die Absoluttemperaturen ebenfalls irrelevant sind, kann auf die standardisierte Vergleichsmessung und auch auf die Kompensation der Thermoelemente verzichtet werden. Dadurch lässt sich der in Fig. 1 gezeigte Aufbau vereinfachen. Fig. 3 zeigt am Beispiel der in Fig. 1 dargestellten Thermowandler, wie eine vereinfachte Messapparatur aufgebaut ist. Innerhalb des Gehäuses sind die beiden Thermowandler direkt miteinander verbunden, die Metalldrähte 5 und 7 werden zu einem einzigen gemeinsamen Leiter aus demselben Material, sie werden sozusagen kurzgeschlossen. Der Thermowandler 2 aus Fig. 1 wurde hierzu in der Darstellung gespiegelt, die beiden identischen Materialien 5 und 7 wurden miteinander verbunden. Hierdurch ergibt sich, dass die Spannung des Thermowandlers 2 von der des Thermowandlers 1 subtrahiert wird. Als Spannung wird nur die unkompensierte Spannungsdifferenz angezeigt. Diese wird im Gehäuse selbst ermittelt und nur das Ergebnis muss als Signal aus dem Gehäuse herausgeführt werden. Das vorübergehende Auftreten einer Thermospannung zeigt dabei einen Gasaustritt an. Analog kann dies auch für die in Fig. 2 gezeigte Ausführungsvarianten so durchgeführt werden.

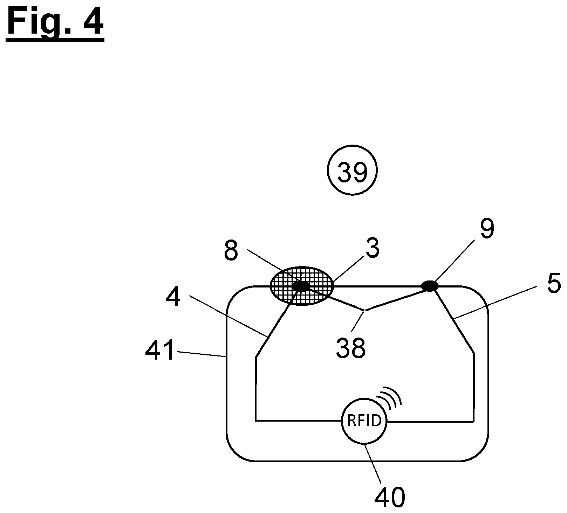

Fig. 4 zeigt eine weitere Ausführungsvariante an, bei der das Signal des Thermoelements durch eine Funkvorrichtung aus dem Gehäuse übertragen wird. Zum Einsatz kommt hierbei ein RFID 40. Solche RFID können passiv oder aktiv sein, letztere benötigen dafür eine Stromversorgung. Anstelle eine Thermospannung zu erzeugen, wird hierfür der Thermostrom genutzt, der im Falle seines kurzzeitigen Auftretens ein aktives RFID betreibt, welches das Signal per Funk ausgibt. Ein solcher Thermowandler 39 benötigt nur noch eine gemeinsame Umhüllung 41 und kann vollständig im Gehäuse platziert werden.

Um auch bei kleinen Strömen oder Spannungen ein ausreichend starkes Signal übertragen zu können, kann je nach Vorrichtung auch eine Thermosäule verwendet werden, bei der mehrere Komponenten parallel oder in Serie geschaltet sind. Der Thermowandler 39 kann gut miniaturisiert werden, inzwischen ist auch das Versenden von Signalen innerhalb von metallenen Gehäusen mittels RFID Stand der Technik geworden.

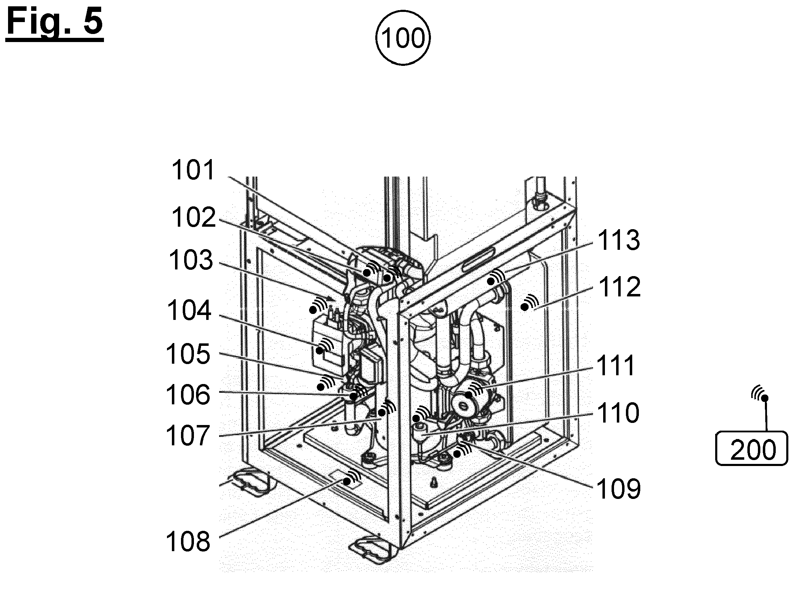

Fig. 5 zeigt eine vereinfachte Darstellung eines Kältekreises einer Wärmepumpe 100 mit einer Vielzahl von entsprechend miniaturisierten Messaufnehmern 101 bis 113, die alle beim Auftreten einer Leckagewolke im zeitlichen Abstand ein Signal nach außen funken. Die Gehäusewände der Wärmepumpe 100 sind aus Gründen der Darstellung abgenommen. Die außen angebrachte Signalerfassungseinheit / Signalverarbeitungseinheit 200 empfängt diese Signale, wertet sie aus, integriert sie und ermittelt daraus die zeitlich-räumliche Ausbreitung.

Es kann in diesem Zusammenhang nützlich sein, an einer Stelle im Raum auch eine Konzentrationsmessung mittels einer anderen Messmethode vorzusehen, um zusätzlich einen Absolutwert der Konzentration zu erhalten, anhand dessen man auf das Ausmaß der gesamten ausgetretenen Kältemittelwolke schließen kann.

Natürlich kann die Signalerfassungseinheit / Signalverarbeitungseinheit 200 die Signale auch mittels herkömmlicher Verdrahtung empfangen und diese weiterverarbeiten.

### Bezugszeichenliste

- 1, 2, 21, 22, 39: Thermowandler
- 3: Adsorptionsmittel
- 4, 5, 6, 7: Metalldraht
- 8, 9: Verbindungspunkt
- 10, 11: Schutzhülle
- 11: Äußeres Gehäuseteil
- 12, 34: Gehäusewand
- 13, 14: Vergleichsstelle
- 15, 16, 35, 36: Spannungsmessgerät
- 17, 37: Vergleichsgerät
- 24, 25, 27, 29, 31, 33: Messfläche
- 26, 30: n-Halbleiter
- 28, 32: p-Halbleiter
- 40: RFID
- 41: Umhüllung
- 100: Wärmepumpe
- 101 bis 113: Messaufnehmer
- 200: Signalerfassungseinheit / Signalverarbeitungseinheit

## Patentansprüche

1. Detektionssystem für eine Gasleckage, aufweisend
- ein geschlossenes Gehäuse (100) mit einer Kältemaschine mit einem Kältemittelkreislauf und einem entzündlichen oder gefährlichen Kältemittel im Kältemittelkreislauf
- mit einer Messvorrichtung in dem geschlossenen Gehäuse
**dadurch gekennzeichnet, dass**
die Messvorrichtung folgende Merkmale umfasst:
eine Vielzahl von Thermowandlern (1, 21, 39) die mit einem auf das zu messende Kältemittelgas als Adsorptiv abgestimmten Adsorptionsmittel beschichtet sind, und innerhalb des Gehäuses (100) platziert sind,
- und die geeignet sind, parallel und gleichzeitig die jeweilige Thermospannung des Adsorbates zu erfassen, sowie
- weiterhin mindestens einem Thermowandler (2, 22), der unbeschichtet die Thermospannung der Umgebungstemperatur der mit Adsorptionmittel beschichteten Thermowandler (1, 21, 39) misst,
- wobei jedes Paar aus Thermowandlern (1, 2, 21, 22, 39) mit einem RFID (40) verbunden ist und die Spannungsdifferenz zwischen den Thermowandlern (1, 2, 21, 22, 39) einen Stromfluss bewirkt, der jeweils das RFID (40) mit elektrischer Energie versorgt, womit das Spannungssignal per Funk an eine zentrale

2. Detektionssystem nach Anspruch 1, **dadurch gekennzeichnet, dass** mit jedem der beschichteten Thermowandler (1, 21, 39) ein unbeschichteter Thermowandler (2, 22) direkt verbunden ist.

## Claims

1. Gas leak detection system with a measuring device comprising
- a closed housing (100) with a refrigeration machine, with a refrigerant circuit and a flammable or hazardous refrigerant in the refrigerant circuit
- with a measuring device in a closed housing
**characterised in that**
the measuring device comprises the following features:
a plurality of thermal transducers (1, 21, 39) coated with an adsorbent matched to the refrigerant gas to be measured as an adsorbate and placed inside the housing (100),
- and which are suitable for detecting the respective thermoelectric voltage of the adsorbate in parallel and simultaneously, and
- further comprising at least one thermoconductor (2, 22) which, uncoated, measures the thermoelectric voltage of the ambient temperature of the thermoconductors (1, 21, 39) coated with adsorbent,
- wherein each pair of thermal transducers (1, 2, 21, 22, 39) is connected to an RFID (40) and the voltage difference between the thermal transducers (1, 2, 21, 22, 39) causes a current to flow, which supplies the RFID (40) with electrical energy, whereby the voltage signal can be transmitted by radio to the central signal acquisition unit (200).

2. . Detection system according to claim 1, **characterised in that** an uncoated thermal transducer (2, 2) is directly connected to each of the coated thermal transducers (1, 21, 39).

## Revendications

1. Système de détection d'une fuite de gaz présentant
- un boîtier fermé (100) avec une machine frigorifique avec un circuit de réfrigérant et un réfrigérant inflammable ou dangereux dans le circuit de réfrigérant
- avec un dispositif de mesure dans le boîtier fermé
**caractérisé en ce que**
le dispositif de mesure comprend les caractéristiques suivantes :
une pluralité de convertisseurs thermiques (1, 21, 39) qui sont revêtus d'un moyen d'adsorption adapté au gaz réfrigérant à mesurer comme adsorbant, et sont placés à l'intérieur du boîtier (100),
- et qui sont conçus afin de détecter parallèlement et simultanément la tension thermoélectrique respective de l'adsorbat, ainsi que
- en outre au moins un convertisseur thermique (2, 22) qui mesure de manière non revêtue la tension thermoélectrique de la température ambiante des convertisseurs thermiques (1, 21, 39) revêtus du moyen d'adsorption,
- dans lequel chaque paire de convertisseurs thermiques (1,2,21,22, 39) est reliée à une RFID (40), et la différence de tension entre les convertisseurs thermiques (1, 2, 21, 22, 39) provoque un flux de courant qui alimente respectivement la RFID (40) en énergie électrique, moyennant quoi le signal de tension peut être transmis par radio à une unité de détection de signal centrale.

2. Système de détection selon la revendication 1, **caractérisé en ce qu'**un convertisseur thermique (2, 22) non revêtu est directement relié à chacun des convertisseurs thermiques (1, 21, 39) revêtus.
